(19) Europäisches Patentamt
European Patent Office
Office européen des brevets

(11) Veröffentlichungsnummer: **0 258 804**
**B1**

(12) # EUROPÄISCHE PATENTSCHRIFT

(45) Veröffentlichungstag der Patentschrift: **10.10.90**

(51) Int. Cl.[5]: **C07F 9/42**

(21) Anmeldenummer: **87112379.0**

(22) Anmeldetag: **26.08.87**

(54) **Verfahren zur Herstellung von Vinylphosphonsäuredichlorid.**

(30) Priorität: **30.08.86 DE 3629578**

(43) Veröffentlichungstag der Anmeldung: **09.03.88 Patentblatt 88/10**

(45) Bekanntmachung des Hinweises auf die Patenterteilung: **10.10.90 Patentblatt 90/41**

(84) Benannte Vertragsstaaten: **BE CH DE FR GB IT LI NL**

(56) Entgegenhaltungen:
**EP-A- 0 047 460**
**DE-A- 1 569 945**
**FR-A- 2 141 962**
**US-A- 4 213 922**

(73) Patentinhaber: **HOECHST AKTIENGESELLSCHAFT, Postfach 80 03 20, D-6230 Frankfurt am Main 80(DE)**

(72) Erfinder: **Siegel, Herbert, Dr., Am alten Birnbaum 10a, D-6238 Hofheim am Taunus(DE)**
Erfinder: **Weiss, Erwin, Dr., Vorderheide 1, D-6238 Hofheim am Taunus(DE)**
Erfinder: **Berger, Harald, Dr., Johann-Strauss-Strasse 45, D-6233 Kelkheim (Taunus)(DE)**

EP 0 258 804 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Vinylphosphonsäuredichlorid. Durch Hydrolyse erhält man daraus Vinylphosphonsäure, die ein wichtiges Zwischenprodukt bei der Herstellung von Flammschutzmitteln und ein wichtiges Monomeres bei der Herstellung von Homo- oder Mischpolymerisaten ist. Derartige Polymerisate sind in Lacken, Kunststoffen, Korrosionsinhibitoren und Beschichtungsmitteln von Bedeutung.

Es ist aus DE-OS 1 568 945 bekannt, Vinylphosphonsäuredichlorid aus 2-Chlorethanphosphonsäuredichlorid durch Abspaltung von HCl in Gegenwart von Triphenylphosphin herzustellen. Weiter ist es aus US-PS 4 213 922 bekannt, 2-Chlorethanphosphonsäuredichlorid aus

2-Chlorethanphosphonsäure-bis-chlorethylester $ClCH_2CH_2\text{-}\overset{O}{P}(OCH_2CH_2Cl)_2$

mitHilfe von Thionylchlorid herzustellen; dabei werden als Katalysatoren tertiäre Amine, N,N-disubstituierte Formamide oder N,N-disubstituierte Phosphorsäuretriamide eingesetzt. Aus DE–OS 2 132 962 ist dieselbe Reaktion mit Hilfe von Phosgen statt Thionylchlorid bekannt; als Katalysatoren werden unter anderen, tertiäre Phosphine und quaternäre Ammonium- oder Phosphoniumsalze eingesetzt.

Die Verwendung von Phosgen zur Herstellung von vinylphosphonsäurechlorid aus 2-Chlorethanphosphonsäure-bis-chlorethylester ist weiterhin aus EP-A-0 047 460 bekannt; in einer ersten Stufe wird dort 2-Chlorethanphosphonsäure-bis-chlorethylester thermisch umgelagert, und die erhaltenen Reaktionsprodukte werden in einer zweiten Stufe unter Zusatz von Phosphonsäuredichloriden in Gegenwart von basischen Katalysatoren mit Phosgen gespalten.

Die Herstellung von Vinylphosphonsäuredichlorid aus 2-Chlorethanphosphonsäure-bis-chlorethylester wird jedoch in keiner der genannten Literaturstellen beschrieben. Überraschenderweise wurde gefunden, daß diese Herstellung ohne Isolation des intermediär entstehenden 2-Chlorethanphosphonsäuredichlorids und ohne Zusatz von basischen Hilfsstoffen zur HCl-Eliminierung mit Hilfe von Thionylchlorid in Gegenwart von tertiären Phosphinen, quaternären Ammonium- oder Phosphoniumsalzen oder Alkali- oder Erdalkalihalogeniden gelingt.

Gegenstand der Erfindung ist demgemäß ein Verfahren zur Herstellung von Vinylphosphonsäuredichlorid, dadurch gekennzeichnet, daß man 2-Chlorethanphosphonsäureester der Formel

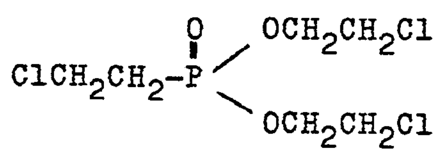

oder

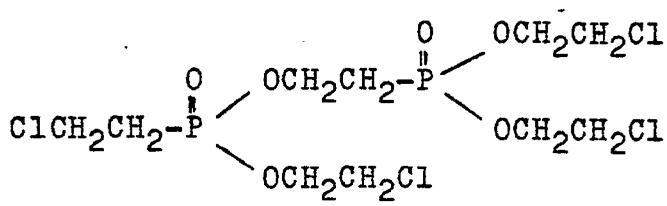

oder ein Gemisch der beiden Ester mit Thionylchlorid bei einer Temperatur von 60 bis 160°C in Gegenwart eines Katalysators umsetzt, der mindestens eine der folgenden Substanzen enthält:

a) tertiäre Phosphine der allgemeinen Formel

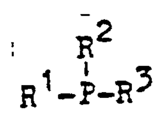

worin die Reste $R^1$, $R^2$, $R^3$ gleich oder verschieden sein können und geradkettiges oder verzweigtes $C_1$-$C_{10}$-Alkyl, ggf. mit $C_1$-$C_4$-Alkoxy-, $C_1$-$C_4$-Alkylthio- oder $C_1$-$C_4$-Dialkylamino-Resten substituiert, oder Phenyl, ggf. mit Halogen-, $C_1$-$C_4$-Alkyl- oder $C_1$-$C_4$-Alkoxy-Resten substituiert, bedeuten

b) quaternäre Ammonium- oder Phosphoniumsalze der allgemeinen Formel

$$\left[ R^1 - \underset{\displaystyle R^4}{\overset{\displaystyle R^2}{Z}} - R^3 \right]^+ \quad Y^- \quad \text{, mit Z= N oder P,}$$

wobei $Y^-$ ein Anion einer starken Säure ist und worin $R^1$,$R^2$,$R^3$ die bei a) genannte Bedeutung haben und $R^4$ geradkettiges oder verzweigtes $C_1$-$C_{10}$-Alkyl oder mit Halogen-, $C_1$-$C_4$-Alkyl- oder $C_1$-$C_4$-Alkoxy-Resten substituiertes Benzyl bedeutet

c) Alkali- oder Erdalkalihalogenide, wobei man anschließend an diese Umsetzung ggf. noch vorhandenes Thionylchlorid abdestilliert, das verbleibende Gemisch auf 140 bis 200°C erhitzt und das dabei entstehende Vinylphosphonsäuredichlorid abdestilliert.

$R^1$, $R^2$, $R^3$ sind vorzugsweise $C_1$-$C_4$-Alkylreste (ggf. substituiert wie oben angegeben) oder Phenylreste (ggf. substituiert wie oben angegeben). $R^4$ ist vorzugsweise ein $C_1$-$C_4$-Alkylrest oder ein mit Halogen-, $C_1$-$C_4$-Alkyl- oder $C_1$-$C_4$-Alkoxy-Resten substituiertes Benzyl.

Die Umsetzung des oder der Ester mit Thionylchlorid wird bei 60 - 160°C, vorzusgsweise 60 - 140°C, insbesondere 80 - 130°C durchgeführt.

Das Molverhältnis von Thionylchlorid zum eingesetzten Ester beträgt 2:1 bis 4:1, vorzugsweise 2,5:1 bis 3,5:1. Die Katalysatormenge beträgt 0,1 bis 10 Molprozent, vorzugsweise 0,5 bis 2 Molprozent, bezogen auf den eingesetzten Ester.

Als Katalysatoren sind folgende tertiäre Phosphine besonders geeignet: Triphenylphosphin, Tris(4-Fluorphenyl)phosphin,Tris(4-Tolyl)phosphin,Tris(4-Methoxyphenyl)phosphin, (N,N-Diethyl)amino-methyldiphenylphosphin, Tri-n-butylphosphin, Bis(4-Methoxyphenyl)-methylphosphin.

Ganz besonders geeignet ist Triphenylphosphin.

Als Anionen $Y^-$ einer starken Säure in der Formel für die quaternären Ammonium- oder Phosphoniumsalze kommen z.B.

$$Cl^- \quad Br^-, \; I^-, \; NO_3^- \;, \; SO_4^{=} \;, \; HSO_4^- \;, \; PO_4^{\equiv}$$

Frage, d.h. das Symbol $Y^-$ soll auch für mehrwertige Anionen stehen.

Unter den quaternären Ammonium- und Phosphoniumsalzen sind als Katalysatoren besonders solche geeignet, die bei der Phasentransferkatalyse verwendet werden, beispielsweise Tetrabutylammoniumbromid, Tetrabutylphosphoniumbromid, Tetrabutylammoniumhydrogensulfat, Methyltrioctylammoniumchlorid, Benzyltrimethylammoniumbromid, Benzyltriethylammoniumchlorid. Ganz besonders geeignet sind Tetrabutylammoniumbromid und Tetrabutylphosphoniumbromid.

Unter den Alkali- oder Erdalkalihalogeniden ist Lithiumbromid besonders als Katalysator geeignet.

Das Thionylchlorid wird vorzugsweise in den vorgelegten Ester eingeleitet, um eine ausreichende Reaktionszeit für die relativ reaktionsträgen Phosphonsäureester zu gewährleisten. Besonders bevorzugt ist es, das Thionylchlorid am Boden des Reaktionsgefäßes in den vorgelegten Ester einzuleiten. Das während der Reaktion abgespaltene Dichlorethan, das bei der eingestellten Reaktionstemperatur abdestilliert und mit zunehmendem Umsatz Thionylchlorid aus dem Reaktionsgefäß austrägt, wird vorzugsweise kondensiert und wieder zurückgeführt. Durch die so bewirkte Kreisführung des unumgesetzten Thionylchlorids wird dieses optimal ausgenützt.

Man kann die Reaktion auch in Gegenwart eines inerten Lösungsmittels durchführen. Als Beispiele seien genannt: Chlorbenzol, Dichlorbenzol oder Kohlenwasserstoffe. Vorzugsweise arbeitet man auch jetzt bei 80 bis 130°C.

Das Ende der Reaktion erkennt man daran, daß die Entwicklung von $SO_2$ und HCl aufhört.

Anschließend destilliert man das entstandene Dichlorethan und ggf. das unumgesetzte Thionylchlorid ab, erhitzt das verbleibende Gemisch auf 140 bis 200°C und destilliert das dabei entstehende Vinylphosphonsäuredichlorid ab.

Die folgenden Beispiele sollen die Erfindung erläutern. Als Ausgangsmaterial wurde roher 2-Chlorethanphosphonsäure-bis-2-chlorethylester verwendet, wie er bei der Arbusow-Umlagerung von Tris-2-chlorethylphosphit $P(OCH_2CH_2Cl)_3$ (DE-OS 2 132 962; Houben-Weyl, Band XII/1 (1963), Seite 389) durch Erhitzen auf 140 °C erhalten wird. Der rohe Ester bestand zu etwa 55 % aus 2-Chlorethanphosphonsäure-bis-2-chlorethylester

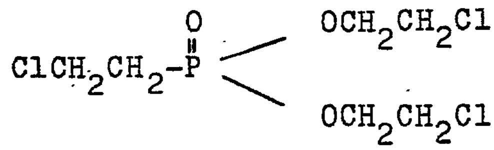

und etwa 38 % 2-Chlorethanphosphonsäuremono-2-chlorethylmono(2-chlorethanphosphonsäure-bis-2-chlorethylester)ester

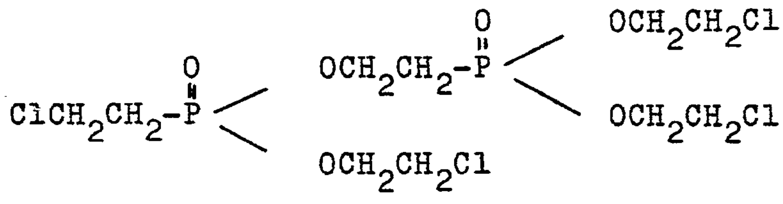

Ansatz und Ausbeute wurden auf den Reingehalt von 93 % bezogen.

Beispiel 1:

500 g roher 2-Chlorethanphosphonsäure-bis-chlorethylester und 497 g (4.18 Mol) Thionylchlorid wurden innerhalb von 30 Minuten in Gegenwart von 5 g Triphenylphosphin auf 115°C erhitzt. Abdestillierendes Dichlorethan und Thionylchlorid wurden in einer Vorlage kondensiert und während 7 Stunden kontinuierlich über ein Tauchrohr am Boden des Reaktionsgefäßes in die Reaktionsmischung zurückgeführt. Anschließend wurden bei 125°C zuerst bei Normaldruck und dann bei 300 mbar die flüchtigen Komponenten abdestilliert. Man erhielt 347.8 g Destillat, das zu 81 % aus Dichlorethan und zu 19 % aus unumgesetztem Thionylchlorid bestand. Zur HCl-Abspaltung wurde das zurückgebliebene 2-Chlorethanphosphonsäuredichlorid bei 120 mbar 5 Stunden auf 140°C erhitzt. Während dieser Zeit destillierten 215.2 g (79 % der Theorie) Vinylphosphonsäuredichlorid vom Siedepunkt 88 - 93 °C über.

Beispiel 2:

100 g roher 2-Chlorethanphosphonsäure-bis-chlorethylester und 99,4 g (0,835 Mol) Thionylchlorid wurden innerhalb von 30 Minuten in Gegenwart von 1,0 g (0,003 Mol) Tetrabutylammoniumbromid auf 125°C erhitzt. Abdestillierendes Dichlorethan und Thionylhchlorid wurden in eine Vorlage kondensiert und während 6 Stunden kontinuierlich über ein Tauchrohr am Boden des Reaktionsgefäßes in die Reaktionsmischung zurückgeführt. Anschließend wurden bei 128°C zuerst bei Normaldruck und dann bei 100 mbar die flüchtigen Komponenten abdestilliert. Man erhielt 69,7 g Destillat, das zu 81 % aus Dichlorethan und zu 19 % aus unumgesetzten Thionylchlorid bestand. Zur HCl-Abspaltung wurde das zurückgebliebene 2-Chlorethanphosphonsäuredichlorid auf 185°C erhitzt, wobei innerhalb einer Stunde bei 166-167°C 40,8 g (0,28 Mol, 76 % der Theorie) Vinylphosphonsäuredichlorid überdestillierten.

Beispiel 3:

Analog Beispiel 2 wurden 100 g roher 2-Chlorethanphosphonsäure-bis-chlorethylester mit 99,4 g (0,835 Mol) Thionylchlorid in Gegenwart von 1,0 g (0,003 Mol) Tetrabutylphosphoniumbromid bei 127°C umgesetzt. Man erhielt 68,7 g Vorfraktion, die zu 86 % aus Dichlorethan und 14 % aus unumgesetzten Thionylchlorid bestand. Erhitzen des zurückgebliebenen rohen 2-Chlorethanphosphonsäuredichlorids auf 185°C lieferte innerhalb einer Stunde 39,0 g (0,27 Mol, 73 % der Theorie) Vinylphosphonsäuredichlorid, das bei 166-167°C überdestillierte.

Beispiel 4:

Analog Beispiel 2 wurden 150 g roher 2-Chlorethanphosphonsäure-bis-chlorethylester mit 149,1 g (1,25 Mol) Thionylchlorid in Gegenwart von 2,0 g (0,05 Mol) Lithiumbromid bei 125°C umgesetzt. Man erhielt 109,8 g Vorfraktion, die zu 86 % aus Dichlorethan und zu 14 % aus unumgesetztem Thionylchlorid bestand. Durch Erhitzen des zurückgebliebenen rohen 2-Chlorethanphosphonsäuredichlorids auf 190°C erhielt man innerhalb von 2 Stunden 62,1 g (0,43 Mol, 77 % der Theorie) Vinylphosphonsäuredichlorid, das bei 165-167°C überdestillierte.

## Patentansprüche

1. Verfahren zur Herstellung von Vinylphosphonsäuredichlorid, dadurch gekennzeichnet, daß man 2-Chlorethanphosphonsäureester der Formel

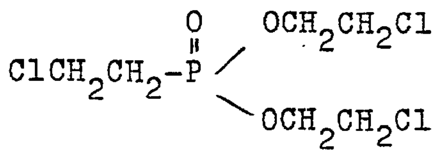

oder

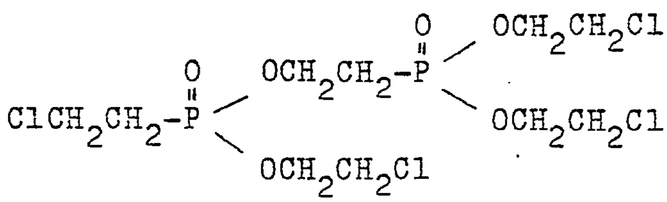

oder ein Gemisch der beiden Ester mit Thionylchlorid, bei einer Temperatur von 60 bis 160°C in Gegenwart eines Katalysators umsetzt, der mindestens eine der folgenden Substanzen enthält:

a) tertiäre Phosphine der allgemeinen Formel

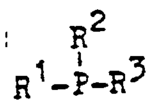

worin die Reste $R^1$, $R^2$, $R^3$ gleich oder verschieden sein können und geradkettiges oder verzweigtes $C_1$-$C_{10}$-Alkyl, ggf. mit $C_1$-$C_4$-Alkoxy-, $C_1$-$C_4$-Alkylthio- oder $C_1$-$C_4$-Dialkylamino-Resten substituiert, oder Phenyl, ggf. mit Halogen-, $C_1$-$C_4$-Alkyl- oder $C_1$-$C_4$-Alkoxy-Resten substituiert, bedeuten

b) quaternäre Ammonium- oder Phosphoniumsalze der allgemeinen Formel

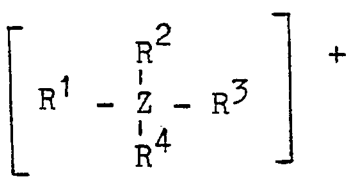 $Y^-$ mit Z= N oder P

wobei $Y^-$ ein Anion einer starken Säure ist und worin $R^1$, $R^2$, $R^3$ die bei a) genannte Bedeutung haben und $R^4$ geradkettiges oder verzweigtes $C_1$–$C_{10}$-Alkyl, oder mit Halogen-, $C_1$–$C_4$-Alkyl- oder $C_1$–$C_4$-Alkoxy-Resten substituiertes Benzyl bedeutet

c) Alkali oder Erdalkalihalogenide,

wobei man anschließend an diese Umsetzung ggf. noch vorhandenes Thionylchlorid abdestilliert, das verbleibende Gemisch auf 140 bis 200°C erhitzt und das dabei entstehende Vinylphosphonsäuredichlorid abdestilliert.

2. Verfahren nach Anspruch 1, dadurch gekennzeichnet, daß man die Umsetzung des oder der Ester mit Thionylchlorid bei 60–140°C durchführt.

3. Verfahren nach Anspruch 1, dadurch gekennzeichnet, daß man die Umsetzung des oder der Ester mit Thionylchlorid bei 80–130°C durchführt.

4. Verfahren nach einem der Ansprüche 1 bis 3, dadurch gekennzeichnet, daß man als Katalysator Triphenylphosphin, Tetrabutylammoniumbromid, Tetrabutylphosphoniumbromid oder Lithiumbromid einsetzt.

5. Verfahren nach einem der Ansprüche 1 bis 4, dadurch gekennzeichnet, daß man das bei der Umsetzung des oder der Ester mit Thionylchlorid abgespalten und zusammen mit unumgesetztem Thionylchlorid abdestillierte Dichlorethan kondensiert und zurückführt.

6. Verfahren nach einem der Ansprüche 1 bis 5, dadurch gekennzeichnet, daß man das Thionylchlorid in den vorgelegten Ester einleitet.

7. Verfahren nach einem der Ansprüche 1 bis 5, dadurch gekennzeichnet, daß man das Thionylchlorid am Boden des Reaktionsgefäßes in den vorgelegten Ester einleitet.

## Claims

1. A process for the preparation of vinylphosphonic dichloride, which comprises reacting a 2-chloroethane-phosphonate of the formula

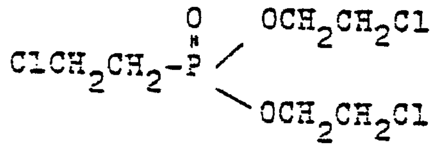

or

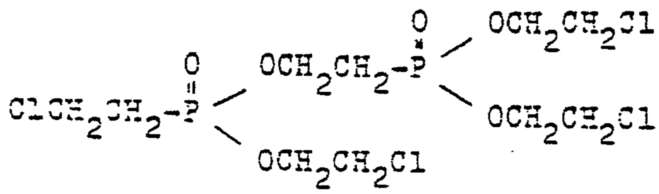

or a mixture of the two esters, with thionyl chloride at a temperature of 60 to 160°C in the presence of a catalyst which contains at least one of the following substances:

a) tertiary phosphines of the general formula

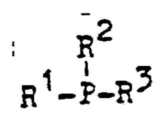

in which the radicals $R^1$, $R^2$ and $R^3$ may be identical or different and denote straight-chain or branched $C_1$–$C_{10}$-alkyl, optionally substituted by $C_1$–$C_4$-alkoxy, $C_1$–$C_4$-alkylthio or $C_1$–$C_4$-dialkylainino radicals, or denote phenyl, optionally substituted by halogen, $C_1$–$C_4$-alkyl or $C_1$–$C_4$-alkoxy radicals,

b) quaternary ainmoniuJn or phosphonium salts of the general fonnula

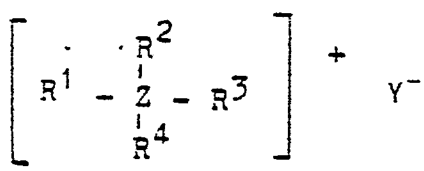

where Z = N or P

where $Y^-$ is an anion of a strong acid and in which $R^1$, $R^2$ and $R^3$ have the meaning mentioned in the case of a) and $R^4$ denotes straight-chain or branched $C_1$–$C_{10}$-alkyl, or benzyl which is substituted by halogen, $C_1$–$C_4$-alkyl or $C_1$–$C_4$-alkoxy radicals,

c) alkali metal or alkaline-earth metal halides,

any thionyl chloride which may still be present being removed by distillation subsequent to this reaction, the mixture remaining being heated to 140 to 200°C, and the vinylphosphonic dichloride produced during this being removed by distillation.

2. The process as claimed in clain 1, wherein the reaction of the ester or esters with thionyl chloride is carried out at 60–140°C.

3. The process as claimed in claim 1, wherein the reaction of the ester or esters with thionyl chloride is carried out at 80–130°C.

4. The process as claimed in any of claims 1 to 3, wherein the catalyst employed is triphenyl phosphine, tetrabutylammonium bromide, tetrabutylphosphonium bromide or lithium bromide.

5. The process as claimed in any of claims 1 to 4, wherein the dichloroethane eliminated during the reaction of the ester or esters with thionyl chloride and removed by distillation together with unreacted thionyl chloride is condensed and recycled.

6. The process as claimed in any of claims 1 to 5, wherein the thionyl chloride is introduced into the initially introduced ester.

7. The process as claimed in any of claims 1 to 5, wherein the thionyl chloride is introduced into the initially introduced ester at the base of the reaction vessel.

## Revendications

1. Procédé pour préparer le dichlorure de l'acide vinyl-phosphonique, procédé caractérisé en ce qu'on fait réagir un ester de l'acide chloro-2 éthane-phosphonique répondant à l'une des formules suivantes:

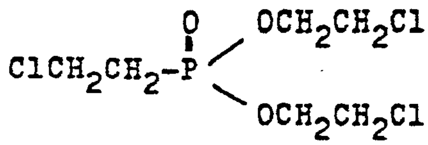

et

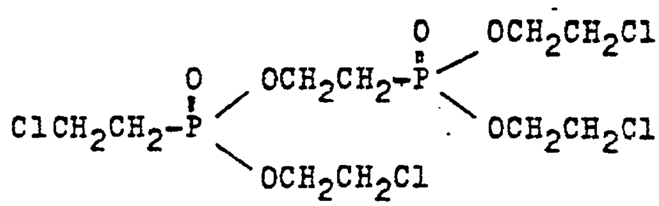

ou un mélange des deux esters, avec le chlorure de thionyle à une température comprise entre 60° et 160°C et en présence d'un catalyseur qui contient au moins une des substances suivantes:

a) phosphines tertiaires répondant à la formule générale:

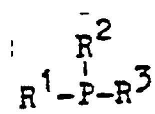

dans laquelle $R^1$, $R^2$ et $R^3$ représentent chacun, indépendamment les uns des autres, un alkyle en $C_1$–$C_{10}$ linéaire ou ramifié, éventuellement porteur d'un alcoxy en $C_1$–$C_4$, d'un alkylthio en $C_1$–$C_4$ ou d'un di-$C_1$–$C_4$-alKylamino, ou un phényle, éventuellemment porteur d'un halogène, d'un alkyle en $C_1$–$C_4$ ou d'un alcoxy en $C_1$–$C_4$,

b) sels d'ammoniums ou de phosphoniums quaternaires répondant à la formule générale:

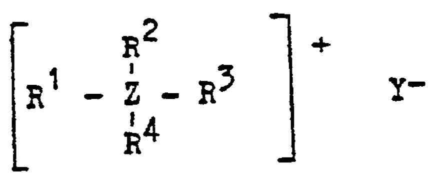

dans laquelle Z représente N ou P, $Y^-$ représente l'anion d'un acide fort, $R^1$, $R^2$ et $R^3$ ont les significations qui leur ont été données sous a) et $R^4$ représente un alkyle linéaire ou ramifié en $C_1$–$C_{10}$ ou un benzyle porteur d'un halogène, d'un alkyle en $C_1$–$C_4$ ou d'un alcoxy en $C_1$–$C_4$,

c) halogénures de métaux alcalins ou de métaux alcalino-terreux, puis, après cette réaction, on chasse par distillation le chlorure de thionyle qui pourrait subsister, on chauffe le mélange restant à une température de 140 à 200°C et on chasse par distillation le dichlorure de l'acide vinylphosphonique qui se forme alors.

2. Procédé selon la revendication 1 caractérisé en ce que la réaction du ou des esters avec le chlorure de thionyle est effectuée à une température de 60 à 140°C.

3. Procédé selon la revendication 1 caractérisé en ce que la réaction du ou des esters avec le chlorure de thionyle est effectuée à une température de 80 à 130°C.

4. Procédé selon l'une quelconque des revendications 1 à 3, caractérisé en ce qu'on utilise comme catalyseur la triphénylphosphine, le bromure de tétrabutylammonium, le bromure de tétrabutylphosphonium ou le bromure de lithum.

5. Procédé selon quelconque des revendications 1 à 4, caractérisé en ce qu'on condense et recycle le dichloréthane qui a été libéré au cours de la réaction du ou des esters avec le chlorure de thionyle et qui s'est échappé par distillation avec le chlorure de thionyle n'ayant pas réagi.

6. Procédé selon l'une quelconque des revendications 1 à 5, caractérisé en ce qu'on introduit le chlorure de thionyle dans l'ester préalablement mis en place.

7. Procédé selon l'une quelconque des revendications 1 à 5, caractérisé en ce qu'on introduit le chlorure de thionyle dans l'ester préalablement mis en place en le faisant arriver par le fond du récipient réactionnel.